# EUROPEAN PATENT APPLICATION

(11) **EP 1 367 489 A1**
(43) Date of publication of application: **03.12.2003**
(21) Application number: 02394066.1
(22) Date of filing: 31.05.2002
(51) Int. Cl.: G06F 11/26

(54) **A microprocessor development system**

(71) Applicant: Ashling Research Limited, Limerick (IE)
(72) Inventor: Murphy, John, County Limerick (IE); Conlon, Mike, Ennis, County Clare (IE); O'Keeffe, Hugh, Nenagh, County Tipperary (IE); O'Loughlin, Ken, Castletroy, Limerick (IE); Carney, Leo, Limerick (IE); Richardson, Bob, County Limerick (IE); Nolan, Margaret, Westbury, Co Clare (IE); Cosgrove, Rory, Limerick (IE); Noonan, Patrick, County Limerick (IE); Hannon, Martin, County Cork (IE); Conlon, Joe, County Clare (IE); Burke, Colm, Limerick (IE); Garvey, Tony, County Kerry (IE); Blackburn, Paul, Newport, County Tipperary (IE); Nicholls, David, County Leitrim (IE); Barry, Deirdre, Thomondgate, Limerick (IE); O'Meara, Pat, County Tipperary (IE); O'Neill, Edward, County Kilkenny (IE); Hall, Deirdre, County Limerick (IE); Lane, Bernadette, Newcastlewest, County Limerick (IE); McGourty, Orlaith, Castleconnell, County Limerick (IE); Beekman, Jan, County Clare (IE); Healy, Michael, Limerick (IE); Hickey, Adrian, Ballysimon, Limerick (IE); Lavin, Patrick, Raheen, County Limerick (IE)
(74) Representative: O'Connor, Donal Henry

(57) **Abstract**

The invention relates to a Microprocessor Development System (MDS). The invention provides an emulator (3) which caters for 32-bit or 64-bit micro-controller (5) architectures using a common hardware platform which supports varying debug architectures controlled by a host computer (2). The invention allows trace data obtained from a target system (4) to be transmitted at very high speeds in excess of 100MHz to the emulator (3) by low voltage differential signalling means. Further trace port information obtained from the target system (4) is accumulated over a number of cycles in at least one field programmable gate array (9) of the emulator (3).

## Description

### Technical Field.

The present invention relates to a microprocessor development system (MDS) comprising a host computer, an emulator connected to a target system and the host computer, the target system having a microcontroller (MCU) and a first port for connection with a second port of the emulator, debug software means stored on the host computer to control and monitor the target system.

### Prior Art Discussion.

In today's world more and more electronic devices are now being controlled by computer software, which usually means the device requires some type of microprocessor to execute the software instructions. The demand for microprocessors has therefore dramatically increased. Microprocessors have become much more powerful and smaller in recent years. Because of the nature of microprocessors it is essential that they are thoroughly debugged both during the development and final release stages and during upgrading. A wide variety of microprocessor development systems have been devised for this purpose. Typically microprocessor or integrated circuit designers and software programmers have used an in-circuit emulator to debug software code or hardware for a new microprocessor being developed. Examples of these microprocessor development systems are US Patent No. US 6,321,329 (Arm Limited), US Patent No. US 6,343,358 (Arm Limited) and US Patent No. US 5,321,828 (Step Engineering) disclose such microprocessor development systems.

Generally speaking, a microprocessor development system has a microcontroller-based target system, having debug and trace ports connected to an emulator, which in turn is connected to a host computer running debug software, controlling and processing information collected from the emulator. The microcontroller may be based on an embedded 32 or 64 bit architecture. Whilst many microcontrollers are equipped to allow embedded software debug using externally connected emulator tools, each microcontroller has different means of affording this debug capability. Problems with this type of architecture is that it is very specific to a type of microprocessor is not very scalable or functional and requires significant add on hardware, which add overall to the complexity of the microprocessor development system.

US Patent No. 5,537,536 (Intel Corporation) discloses an apparatus and method for debugging a microprocessor or software executed by the microprocessor to correct logical errors or programming errors. A problem with this patent specification is that the architecture is specific to one type of microprocessor. Further, it has been found that when a microprocessor which operates at high frequencies it is difficult to capture and record information relating to the execution of the program running on the target microprocessor in real time when the microprocessor is operating at high frequencies, for example 100 MHz or over.

Another problem with microprocessor development systems is that it is necessary for high-speed trace data to be processed and stored in the emulator memory in real time. The high-speed trace data is data obtained from the microprocessor during development. US Patent No. US 6,173,419 (Advanced Technology Materials Inc.) again discloses an emulator to use to debug software operating on a microprocessor in a target circuit environment. This patent specification discloses an emulator containing a field programmable gate array that is programmed to control an emulated target microcontroller and an emulated monitoring circuit which monitors the operations of the microprocessor. The signals from the target circuit environment are communicated tothe emulator by one or more channels. However, it has been found that signalling of high speed trace data is not achieved in real time.

Therefore, it is an object of the present invention to provide a microprocessor development system to overcome the above-mentioned problems.

### Summary of the Invention.

According to the present invention there is provided a microprocessor development system (MDS) comprising:
a host computer;
an emulator connected to a target system and the host computer, the target system having a microcontroller (MCU) and a first port for connection with a second port of the emulator;
debug software means stored on the host computer to control and monitor the target system;
characterised in that there is provided low voltage differential signalling transmission means between the first port and the second port whereby high speed digital logic signals on the target system are converted to differential signals at low voltage before being transmitted to the second port of the emulator.

The advantage of the microprocessor development system is that by using low voltage differential signalling techniques the data from the target system can be transmitted to the emulator at much higher speeds. This is important in microprocessor development systems to improve the efficiency of the design of the target system or microprocessor being developed. Preferably the emulator has means for converting the low voltage differential signals to digital logic signals. The low voltage differential signals are converted by low voltage differential signalling (LVDs) circuits, by low voltage it is meant any voltage less than 10V.

Ideally trace data obtained from the microcontroller is processed and stored in memory of the emulator in real time.

In one embodiment there is provided a microprocessor development system wherein the emulator comprises at least one field programmable gate array in which digital logic signals are accumulated over a number of target system cycles and stored and in which the emulator memory is arranged as 4 X 32 bit wide banks each addressed in parallel to provide 128 bit wide memory, and several trace port information cycles obtained from the second port are concatenated in one register, which is written to the 128 bit wide memory when the register is full.

Preferably 32 bit and 64 bit microcontroller architectures are supported.

Ideally run/stop static debug control uses a parallel port connection to the host computer.

In another embodiemnt of the present invention the emulator comprises several USB and Ethernet connection options to the host computer, an internal microprocessor to process debug port signals a programmable logic device for storing VHDL instructions to process information obtained from the second port and a static random access memory device for storing an emulator embedded MCU program.

Ideally there is provided remote debug capability over a computer network.

In a further embodiment the second port comprises a primary trace port which supports 23 input trace data channels and a secondary trace port which supports 12 input data channels.

Preferably real time trace signals are captured and stored with time stamp information by incorporating high speed programmable logic in the trace port channels and in which the high-speed programmable logic is programmed for a specified target system embedded microcontroller architecture.

Preferably the first port is a trace port in which instantaneous program activity information is to be transmitted by the MCU to the emulator.

Ideally the MCU comprises the parallel run/stop port to facilitate functions to stop/start a program running directly on the MCU.

### Brief Description of the Drawings.

The invention will be more clearly understood from the following description of some embodiments thereof, given by way of example only, with reference to the accompanying drawing, in which:

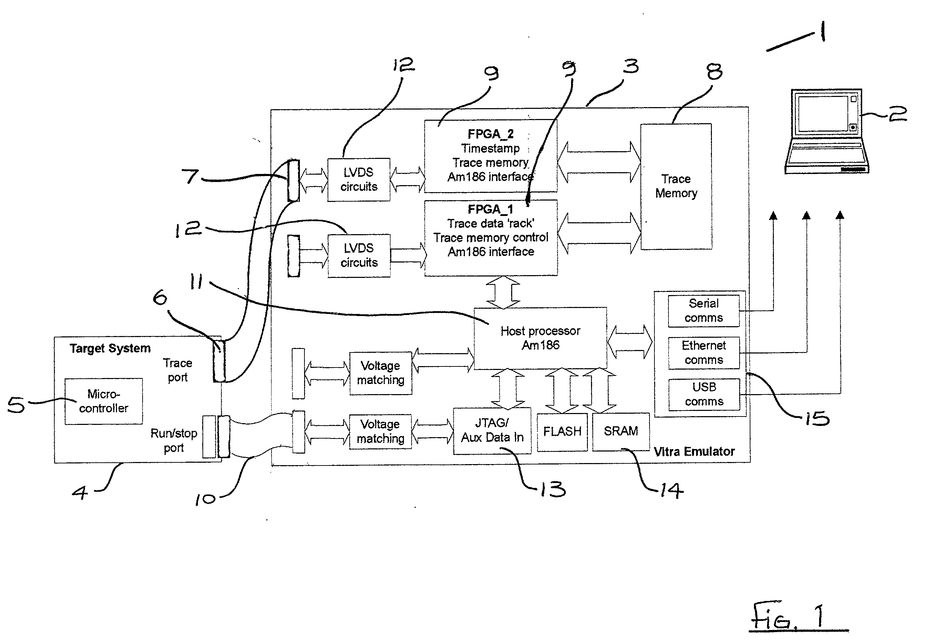

Fig. 1 is a block diagram representation of a microprocessor development system of the invention.

### Detailed Description of the Invention.

Referring to the drawing Fig. 1, there is shown a microprocessor development system 1 of the present invention. The system 1 comprises a host computer 2 which executes and stores a control program and a source level debugger for a target processor application. The host computer 2 is connected to an emulator 3 which in turn is connected to the target processor system 4. The target processor system 4 comprises a microcontroller 5 and a first port 6 which is connected, by cable, to a second port 7, located on the emulator 3. The emulator 3 comprises at least one field programmable gate array (FPGA) 9 and an emulator memory 8. The emulator 3 has a primary debug port 10 for connection with the target microprocessor system 4 which is used as a run/stop port. The emulator 3 further comprises a microprocessor 11 to process debug port signals obtained from the target microprocessor system 4.

To cater for microprocessors or microcontrollers which operate at high frequencies, it is necessary for the emulator 3 to capture and record information relating to the execution of the program running on the target microcontroller 5 in real time when the microcontroller is operating at high clock rates, typically 100 MHz and over. In order to communicate data from the target microprocessor system 4 via the first and second ports 6 and 7 to the memory 8 within the emulator 3, the invention achieves this by using low voltage differential signalling techniques whereby high speed digital logic signals on the target microprocessor system 4 are converted to differential signals at low voltage, under 5V, before being transmitted at high speed along the cable connecting the first and second ports 6 and 7 respectively, to the emulator 3. In the emulator 3, the signals are subsequently converted back to standard single ended digital logic signals by low voltage differential signal circuits 12.

To ensure the high speed data can be processed and stored in the memory 8 in real time, the information received from the port 7 is accumulated as a trace capture over a number of target system cycles in the field programmable gate arrays 9 of the emulator 3. The memory 8 is arranged as a 4 X 32 bit wide banks, all addressed in parallel to provide a single 128 bit wide address. By concatenating several trace captures in one register and writing to the 128 bit wide memory system when the register or rack is full, allows the data presented by the target microprocessor system 5, at a high rate, to be written to the memory 8 of the emulator 3 at a much slower rate. This is important with regard to the present invention as the microcontroller 4 operates at speeds in excess of the write access times of prevailing highest speed memory technology.

The invention offers varying degrees of debug capability according to the integrated circuit designer's and embedded system designer's needs. The invention is scalable and can be implemented by a designer in three forms. The first form caters for run/stop static debug control of the microcontroller 5 using a parallel port connection to the host computer 2. The second form also comprises a run/stop static debug controller but with enhanced features. The invention offers serial, USB and Ethernet connection options 15 to the host computer 2. The invention is equipped with its own internal micro-processor 11 which gives built-in power to generate / process debug signals to / from the target, thus freeing up the host computer 2. This embedded power, combined with high speed Ethernet/USB host connection options 15, serve to accelerate the entire target application program debug cycle. Remote debug capability (using TCP / IP over Ethernet) is possible by connecting the emulator 3 to a computer network. The final form is an extension of the second form of the invention which extends the capabilities to cater for on-chip run time instruction and data trace facilities, as well as offering user defined trigger and signal tracing options.

It will be appreciated that the invention provide the following feature set:-
- run/stop control of the target application,
- single stop, function step into/over,
- examination/modification of target microcontroller registers,
- read/write access to both on-chip and target system memory,
- simultaneous display of source and assembly application code,
- high speed application code download,
- target flash memory programming capability,
- support for all on-chip hardware breakpoints (generally 2 or more),
- unlimited number of software breakpoints,
- automatic sensing of target operating voltage levels,
- support for low voltage target systems,
- full target reset control,
- instruction flow tracing,
- data access tracing (dependent on microcontroller on-chip facilities),
- tracing of user specified signals,
- timestamping,
- user defined trace trigger inputs,
- scaleable trace buffer memory size,
- customised Debugger software.

The design of the present invention is such that other microcontrollers featuring on-chip debug resources may be easily supported. In general, the design of the present invention is configurable to enable run/stop control of any CPU/MCU or Digital Signal Processor which caters for debug control via a JTAG port 13 or similar port.

The invention permits run/stop control using IEEE 1149.1 JTAG (or similar) base control of the target microcontroller 5 core debug control port 6. Debug control is not intrusive and requires no target system resources. The invention allows standard static debug tasks to be carried out on the target microcontroller 5. These tasks include the setting of breakpoint examination of core/microcontroller state, examination of system state, single stepping of both assembly and high level user code. The system is capable of automatically sensing the target microprocessor systems 4 operating voltage and setting its control signal levels accordingly. The system is capable of separately controlling the target system reset and its debug port reset where the target system allows.

The system draws its power directly from 2.5 volts, 3.3. volts and 5 volts target systems. For cases where target power is not available or is insufficient, the system may be separately powered from a small external 3.3 volt power supply, for example, rated at 250 milliamps.

The invention can be implemented as a parallel port to J TAG 14 signal stream converter. An industry standard test bus controller integrated circuit is controlled by the host computer 2 software acting through some digital logic implemented on a programmable logic device such as a field programmable gate array 9 in a computer language such as VHDL. The target connection signals include the normal J TAG signals. These may alternatively be configured to either BDM or ISTO-5001 auxiliary signals, as necessary. Target system reset and target voltage sensing signals are also included. To cater for different target connection schemes, an adaptor may be required at the end of the connector cable.

The invention hardware consists of an embedded microprocessor 11 controlling a dedicated input/output controller implementing JTAG and BDM signals, appropriate to the particular application. An expansion bus may be provided which facilitates upgrading of the hardware specification as required.

It will be appreciated that the invention provides real time trace debug capability. The emulator 3 analyses and accumulates target system program execution information, as presented by the port 7 as low voltage differential signals and converted to digital signals by the low voltage differential circuits 12. Analysis is carried out on digital logic circuits implemented on the FPGA's 9 with storage of required data on high speed synchronous random access memory devices 14.

It will be appreciated that the invention may have at least two ports. A primary trace port 7 can support up to twenty three input data trace channels strobed with a clock signal from the target microprocessor system 4. The secondary trace port can support up to twelve inport trace channels, as well as trace triggering controls. In general, the primary trace port is used to connect to the target systems dedicated trace port 6. The trace ports 6 and 7 are connected to the target microprocessor system 4 using low voltage differential signal techniques as already discussed over a flat cable. The low voltage differential signal circuits 12 converts single, in the target signals, to differential signals. In this way, the signal integrity of the high speed data being transmitted over the cable is maintained. A set of start/stop trigger signals are also generated and made available externally to control trace capture to another instrument, for example, a logic analyser (not shown). The real time trace signals are captured and stored with time stamp information on the trace memory 8. The different microcontroller trace ports have different trace data communications protocol. To cater for this high speed programmable logic is incorporated in the trace front end data acquisition circuit and is configured for a specified microcontroller at run time.

It will be appreciated that the present invention provides an emulator design which can cater for the all popular embedded 32 bit or 64 bit microcontroller architectures using the one common hardware platform. While all supported microcontrollers are equipped with on-chip resources specifically provided to allow embedded software debug using externally connected emulator tools, each microcontroller type has differing means of affording this debug capability on the one silicon.

It will be appreciated that various aspects of the invention may be embodied on a computer that is running a program or program segments originating from a computer readable or usable medium, such medium including but not limited to magnetic storage media (e.g. ROMs, floppy disks, hard disks, etc.) optically readable media (e.g. CD-ROMs, DVDs, etc.) and carrier waves (e.g. transmissions over the Internet). A functional program, code and code segments, used to implement the present invention can be derived by a skilled computer programmer from the description of the invention contained herein.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the appended claims.

## Claims

1. A microprocessor development system (MDS) comprising;
a host computer (2);
an emulator (3) connected to a target system (4) and the host computer (2), the target system (4) having a microcontroller (MCU) (5) and a first port (6) for connection with a second port (7) of the emulator (3);
debug software means stored on the host computer (2) to control and monitor the target system (4);
**characterised in that** there is provided low voltage differential signalling transmission means between the first port (6) and the second port (7) whereby high speed digital logic signals on the target system (4) are converted to differential signals at low voltage before being transmitted to the second port of the emulator (3).

2. A microprocessor development system as claimed in claim 1 in which the emulator (3) has means for converting the low voltage differential signals to digital logic signals.

3. A microprocessor development system as claimed in claim 1 and 2 in which trace data obtained from the microcontroller (5) is processed and stored in memory (8) of the emulator (3) in real time.

4. A microprocessor development system as claimed in any preceding claim wherein the emulator (3) comprises at least one field programmable gate array (9) in which digital logic signals are accumulated over a number of target system cycles and stored.

5. A microprocessor development system as claimed in any preceding claim in which the emulator memory (8) is arranged as 4 X 32 bit wide banks each addressed in parallel to provide 128 bit wide memory.

6. A microprocessor development system as claimed in claim 5 in which several trace port information cycles obtained from the second port (7) are concatenated in one register, which is written to the 128 bit wide memory when the register is full.

7. A microprocessor development system as claimed in any preceding claim in which 32 bit and 64 bit microcontroller architectures are supported.

8. A microprocessor development system as claimed in any preceding claim in which run/stop static debug control uses a parallel port (10) connection to the host computer.

9. A microprocessor development system as claimed in any preceding claim in which the emulator (3) comprises several USB and Ethernet connection options (15) to the host computer (2).

10. A microprocessor development system as claimed in any preceding claim in which the emulator (3) comprises an internal microprocessor (11) to process debug port signals.

11. A microprocessor development system as claimed in any preceding claim in which there is provided remote debug capability over a computer network.

12. A microprocessor development system as claimed in any preceding claim in which the emulator (3) has a programmable logic device for storing VHDL instructions to process information obtained from the second port (7).

13. A microprocessor development system as claimed in claim 12 in which the emulator (3) comprises a static random access memory device for storing an emulator embedded MCU program.

14. A microprocessor development system as claimed in any preceding claim wherein the second port (7) comprises a primary trace port which supports 23 input trace data channels and a secondary trace port which supports 12 input data channels.

15. A microprocessor development system as claimed in any preceding claim in which real time trace signals are captured and stored with time stamp information by incorporating high speed programmable logic in the trace port channels.

16. A microprocessor development system as claimed in claim 15 in which the high-speed programmable logic is programmed for a specified target system embedded microcontroller architecture.

17. A microprocessor development system as claimed in any preceding claim, in which the first port is a trace port in which instantaneous program activity information is to be transmitted by the MCU (5) to the emulator (3).

18. A microprocessor development system as claimed in any preceding claim, in which the MCU (5) comprises the primary run/stop port to facilitate functions to stop/start a program running directly on the MCU (5).

19. A computer program comprising program instructions for causing a computer to perform and / or control any of the functions of the microprocessor development system as claimed in claims 1 to 18.

20. A computer program according to claim 19 embodied on a recordable medium.

21. A computer program according to claim 19 stored in a computer memory.

22. A computer program according to claim 19 embodied in a read-only memory.

23. A computer program according to claim 19 carried on an electrical carrier signal.

24. A computer program according to claim 19 carried on an optical carrier signal.
